# EUROPÄISCHE PATENTSCHRIFT

(11) **EP 0 404 782 B1**
(45) Veröffentlichungstag und Bekanntmachung des Hinweises auf die Patenterteilung: **20.10.1993**
(21) Anmeldenummer: 89902629.8
(22) Anmeldetag: 21.02.1989
(51) Int. Cl.: A01K 63/04, C02F 3/20

(54) **VERFAHREN ZUR AUFZUCHT VON WASSERTIEREN**
PROCESS FOR CULTURE OF AQUATIC ANIMALS
PROCEDE POUR LA CULTURE D'ANIMAUX AQUATIQUES

(30) Priorität: 24.02.1988 DE 3805607
(43) Veröffentlichungstag der Anmeldung: 02.01.1991
(73) Patentinhaber: ENGELBART, Wilke, Dr., D-26655 Westerstede (DE)
(72) Erfinder: ENGELBART, Wilke, Dr., D-26655 Westerstede (DE)
(74) Vertreter: Ninnemann, Detlef, Dipl.-Ing.
(86) Internationale Anmeldenummer: DE8900106
(87) Internationale Veröffentlichungsnummer: WO8907885

(56) Entgegenhaltungen:
- WO-A-87/07475
- WO-A-87/07590
- DE-A- 3 434 669
- FR-A- 2 367 705
- GB-A- 1 106 527
- US-A- 1 681 890

## Beschreibung

Die Erfindung betrifft ein Verfahren der im Oberbegriff des Anspruchs 1 angegebenen Art. Ein derartiges Verfahren ist aus der WO-A-87/07475 bekannt.

Aus der Literaturstelle "DLG-Mitteilungen 7/1980, Seiten 393 bis 398" sind technische Verfahren zur Fischzucht bekannt, nach denen Fischzuchtanlagen in zwei Gruppen unterteilt werden, nämlich in Durchlaufanlagen und Kreislaufanlagen. Im Unterschied zu Durchlaufanlagen, bei denen das Wasser nur einmal eingesetzt wird und dann die Fischzuchtanlage verläßt, wird bei Kreislaufanlagen das verbrauchte Wasser wiederaufbereitet und dann den Fischbecken erneut zugeführt.

Die Wiederaufbereitung des Wassers in den Kreislaufanlagen erfolgt in einem Nebenschluß entweder in einem Belebtschlammbecken mit oder ohne Tauchkörper oder in Tropfkörperanlagen, wie sie aus der biologischen Abwasserreinigung bekannt sind. Ein wesentlichen Merkmal dieser Wiederaufbereitungsverfahren des Wassers ist die Entfernung von Kot und Schlamm aus dem Wasser, das den Fischbecken wieder geklärt zugeführt wird. Zu diesem Zweck werden Absetzbecken und/oder Siebe eingesetzt.

Aus der DE-OS 36 19 757 ist ein Fischbecken zur Intensiv-Fischmast und ein Verfahren zum Betrieb eines derartigen Fischbeckens bekannt, deren wesentliches Merkmal in der gleichzeitigen Belüftung und biologischen Behandlung des Wassers in einem Fischbecken mit Hilfe des Adhäsiv-Belebtschlamm-Verfahrens besteht, wobei in einem in der Mitte des Fischbeckens angeordneten Schacht über Belüftungseinrichtungen Füllkörperpackungen, wie sie aus der Kühlturmtechnik bekannt sind, angebracht sind, die als großflächige Einbauten zur Aufnahme eines sog. biologischen Rasens dienen, der das nach dem Mammutpumpenprinzip durch den Schacht strömende Wasser biologisch behandelt.

Ohne Zwischenklärung gelangt das so behandelte Wasser durch Absperrsiebe zurück in den Fischteil des Beckens, während Kot und Überschußschlamm im Wasser verbleiben und im unbelüfteten Fischteil durch die entstehenden Strömungen und durch die Fische in der Schwebe gehalten werden. Eine Anreicherung von Schwebstoffen im Fischbecken wird dadurch vermieden, daß Wasser in einem Nebenschluß durch ein Absetzbecken geführt wird, wo die absetzbaren Stoffe angereichert und abgezogen werden und das geklärte Wasser wieder den Fischbecken zugeführt wird.

Der Vorteil dieses bekannten Verfahrens gegenüber den in Durchlauf- und Kreislaufanlagen verwendeten Verfahren liegt in einem wesentlich häufigeren Durchsatz des Fischbeckenwassers durch den biologischen Behandlungsteil und in einem wesentlich reduzierteren Flächenbedarf für das Absetzbecken bzw. für einen Schlammfilter.

Aus der US-A-1 681 890 ist eine Vorrichtung zur Reinigung von Abwässern bekannt, die aus einem Belüftungsbecken für Abwässer besteht, dessen Beckenboden mit im Querschnitt dreieckförmigen Erhebungen versehen ist, zwischen denen Diffusionsplatten angeordnet sind. Unterhalb der Diffusionsplatten befinden sich Luftkammern, in die über Leitungen Durckluft zugeführt wird. Diese Druckluft gelangt durch die Diffusionsplatten und steigt in das im Becken befindliche Abwasser auf und durchlüftet dieses Abwasser gleichmäßig und mit einer geeigneten Durchsatzrate. Die im Becken befindlichen aeroben Bakterien sorgen für eine Reinigung des Abwassers, benötigen hierfür aber den durch die am Beckenboden angeordnete Belüftungseinrichtung zugeführten Sauerstoff. Vor dem Einfüllen des Abwassers in das Reinigungsbecken werden schwere Bestandteile des Abwassers entfernt und in einen Sedimentationstank gefüllt.

Aus der FR-A-2 367 705 ist eine Reinigungseinrichtung für ein Aquakulturbecken bekannt, bei der eine Mischung aus Luft und rezirkuliertem Wasser in ein Aquakulturbecken injiziert wird, wobei die Injektion des Luft-Wasser-Gemischs in Richtung auf den Beckenboden gerichtet ist und die Vermischung zwischen Luft und rezirkuliertem Wasser über eine Düseneinrichtung erfolgt. Dabei ist das Mischungsverhältnis zwischen Luft und rezirkuliertem Wasser steuerbar und ermöglicht somit eine geeignete Reinigung des im Aquakulturbecken befindlichen Wassers sowie eine hinreichende Belüftung für die im Aquakulturbecken befindlichen Wassertiere. Eine intensive Haltung von Wassertieren im Becken ist mit dieser Vorrichtung jedoch nicht möglich, da allein die Art des Eintrags von Sauerstoff in das Wasser für eine derartige Intensivhaltung unzureichend wäre und zudem die Gefahr besteht, daß anaerobe Bereiche geschaffen werden, da das im Becken befindliche Wasser nicht gleichmäßig mit Gas in Berührung gebracht wird.

Der Erfindung liegt die Aufgabe zugrunde, bei einem Verfahren der eingangs genannten Gattung die Lebensbedingungen zur intensiven Aufzucht von Fischen und anderen Wassertieren so zu optimieren, daß in Abhängigkeit von der jeweiligen Tierart eine maximale Wachstumsrate unter Ausnutzung der biologischen Randbedingungen gegeben ist.

Diese Aufgabe wird mit den kennzeichnenden Merkmalen des Anspruchs 1 gelöst.

Die erfindungsgemäße Lösung schafft die Voraussetzung für eine optimale Aufzucht von Fischen und/oder Plankton in Intensiv-Fischzuchtanlagen in Abhängigkeit von der jeweiligen Fischart, wobei auch verschiedene Tier- und Fischarten in einer Anlage ihre jeweils optimalen spezifischen Bedingungen vorfinden können, da die für eine oder mehrere Tierarten optimalen biologischen Randbedingungen ausgenutzt werden können, um eine maximale Wachstumsrate bei geringem Aufwand und vor allen Dingen geringem Platzbedarf zu erzielen.

Eine vorteilhafte Weiterbildung der Erfindung ist dadurch gekennzeichnet, daß der Belebtschlamm zusätzlich durch eine horizontale Strömungskomponente verteilt wird.

Die erfindungsgemäße Lösung geht von Erkenntnissen aus Verfahren zur Fischzucht in belüfteten Teichen aus. Dabei wird insbesondere nachts, wenn ein biologischer Sauerstoffeintrag durch Algen fehlt, das Teichwasser auf unterschiedliche Weise belüftet und umgewälzt, wobei aber vermieden wird, den sich am Teichboden absetzenden Schlamm ständig wieder aufzuwirbeln und im Teichwasser in der Schwebe zu halten, weil dies zu Beeinträchtigungen der Fische führen soll. Andererseits werden durch die Begasungseinrichtungen verhältnismäßig starke Turbulenzen im Wasser erzeugt, die die Fische beeinträchtigen.

Überraschenderweise hat es sich nun aber gezeigt, daß Belebtschlamm, auch wenn er mit Algen vermischt ist, dann praktisch keinen negativen Einfluß auf eine Vielzahl von Fisch- und andere Wassertierarten hat, wenn er zwangsweise und ständig im Wasser mit ausreichendem Sauerstoffgehalt und bei geringen Turbulenzen in der Schwebe gehalten wird.

Zwar konnte zufällig beobachtet werden, daß in Fischzuchttanlagen mit Belebtschlamm-Nebenschlußanlagen immer wieder einmal Fische in den Belebtschlammteil gelangt sind und dort überlebt haben, jedoch ging man bisher davon aus, daß ein optimales Fischwachstum unter diesen Verhältnissen nicht möglich ist. Eine zielgerichtete Aufzucht von Fischen oder anderen für Speisezwecke geeigneten Wassertieren in belebtschlammhaltigem Wasser unter Zugabe von Futter ist nicht bekannt. Auch ist es nicht bekannt, in welcher Weise das belebtschlammhaltige Wasser umgewälzt werden soll, damit es für Fische und Belebtschlamm optimale Bedingungen aufweist.

Eine vorteilhafte Weiterbildung der Erfindung ist dadurch gekennzeichnet, daß die Durchflußmenge des sauerstoffhaltigen Gases und/oder der Gasdruck mittels einer Steuereinrichtung veränderbar ist und so klein gehalten wird, daß Fische von den so entstehenden Turbulenzen nicht beeinträchtigt werden. Dies ist im allgemeinen bei größeren Fischen dann gewährleistet, wenn bei Blasengrößen unter 4 mm Durchmesser weniger als 10 Kubikmeter Gas pro Quadratmeter Belüfterfläche und pro Stunde eingeblasen werden. Bei kleineren Fischen muß die Belüftungsintensität entsprechend kleiner sein.

Eine weitere vorteilhafte Weiterbildung der Erfindung ist dadurch gekennzeichnet, daß der Beckenboden V-förmig ausgebildet ist oder aus mehreren V-förmig nebeneinander angeordneten Beckenböden besteht, wobei über den Belüftungseinrichtungen vertikale Schächte angeordnet und die vertikalen Schächte mit Füllkörperpackungen versehen sein können. Zusätzlich können oberhalb der Belüftungseinrichtungen Siebe angeordnet sein.

In einer weiteren vorteilhaften Ausgestaltung ist der Beckenboden trapezförmig ausgebildet und im waagerechten Teil des trapezförmigen Bodens mindestens eine Belüftungseinrichtung angeordnet sowie ggf. über der mindestens einen Belüftungseinrichtung ein vertikaler Schacht und/oder mindestens eine Füllkörperpackung angeordnet.

Eine vorteilhafte Weiterbildung der Erfindung ist dadurch gekennzeichnet, daß der Beckenboden pyramidenförmig oder W-förmig bzw. das Fischbecken als Rundbecken mit einem kegelförmigen Beckenboden ausgebildet ist.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
Figur 1 einen Querschnitt durch ein Becken mit über dem Beckenboden verteilt angeordneten Begasungs- bzw. Belüftungseinrichtungen;
Figur 2 einen Querschnitt durch einen nur teilweise mit Belüftungseinrichtungen versehenen Beckenboden mit abgeschrägten Wänden;
Figur 3 einen Querschnitt durch ein Becken gemäß Figur 2 mit Schächten über den Belüftungseinrichtungen;
Figur 4 einen Querschnitt durch ein Becken gemäß Figur 3 mit Füllkörperpackungen in den Schächten;
Figur 5 einen Querschnitt durch ein Becken mit V-förmigem unbelüftetem Tiefteil unter den Beluftungseinrichtungen;
Figur 6 einen Querschnitt durch einen Planktonteich oder ein Fischbecken mit einer über einer Belüftungseinrichtung angeordneten vertikalen Wand;
Figur 7 eine Draufsicht auf ein Becken mit pyramidenförmigem Beckenboden;
Figur 8 einen Querschnitt durch ein Becken mit einem pyramidenförmigen Beckenboden gemäß Figur 7;
Figur 9 eine Draufsicht auf ein Becken mit kegelförmigem Beckenboden;
Figur 10 einen Querschnitt durch ein Becken mit einem kegelförmigen Beckenboden gemäß Figur 9;
Figur 11 eine schematische Draufsicht auf ein mit einem Absetz- und Algenbecken verbundenes Fischbecken und
Figur 12 einen Querschnitt durch ein Fischbecken mit trapezförmigem Beckenboden und schrägen Sieben.

Das erfindungsgemäße Verfahren sowie die Vorrichtungen zur Durchführung des Verfahrens weisen somit folgende wesentliche Merkmale auf:
1. Belüftungseinrichtungen in der Nähe von V-, W-, trapez- oder kegelförmig tiefsten Stellen des Beckenbodens eines Teiches oder Fischbeckens,
2. Schwache Beaufschlagung der Belüftungseinrichtungen, so daß die resultierende Aufwärtsbewegung des Wasser-Luftblasen-Gemisches nicht zu groß wird und Fische oder andere Wassertiere mitreißt,
3. Wände und/oder Boden abgeschrägt zur tiefsten Stelle hin geneigt, damit sich absetzender Schlamm weiterfließt und dann wieder mit den Gasblasen nach oben transportiert wird,
4. Integration einer Absetzanlage oder eines Siebes, so daß praktisch schlammfreies Wasser entsprechend der Zugabemenge an Wasser aus dem Fischteil abfließt, und
5. Zugabe von so wenig Wasser, daß daraus mit dem Futter eine so große Schlammenge entsteht, daß ein bestimmtes Verhältnis zwischen absetzbaren Stoffen (= Schlamm) und Futter entsteht.

### Beispiel 1:

Aus 1 kg trockenem Futter, das an die Fische verfüttert wird, entstehen aus den Fischexkrementen etwa 5 l abgesetzter Belebtschlamm (Trockensubstanzgehalt darin 1 - 2 % TS). Bei 50 l Wasserzugabe pro kg Futter entstehen also 5 l Belebtschlamm in 50 l, d.h. 100 ml Belebtschlamm pro Liter.

Für 1 kg Futter pro Tag werden zum biologischen Abbau der Fischexkremente ca. 50 l Belebtschlamm benötigt, bei 100 ml Belebtschlamm pro 1 also 500 l belebtschlammhaltiges Wasser. Dieses Volumen reicht gleichzeitig zur Aufnahme der Fische, die das kg Futter fressen. Es ergibt sich, daß auf 500 l Beckenvolumen täglich 1 kg Futter gegeben werden können, die Exkremente werden von den enthaltenen 50 l Belebtschlamm gut abgebaut, der Wasserzusatz beträgt 50 l sauberes Wasser, während 50 l Schlammwasser mit 5 l Belebtschlamm (aus 1 kg Futter) ablaufen.

Unter diesen Umständen ist also kein Absatzbecken erforderlich, das System befindet sich in diesem Beispiel im Fließgleichgewicht. Für die Sauerstoffversorgung müssen bei einem 2,5 m tiefen Becken, entsprechend 0,2 m² Oberfläche, stündlich 1 bis 2 m³ Luft feinblasig eingetragen werden. Bei vollständiger Auslegung des Beckenbodens mit Belüftungseinrichtungen entstehen dabei nur schwache Turbulenzen im Wasser.

### Beispiel 2:

Für Lachse, Forellen, die klares Wasser mit weniger als 3 ml abgesetzten Belebtschlamms pro 1 brauchen, da sie das Futter mit den Augen finden müssen, werden wieder 50 l Belebtschlamm pro kg Futter benötigt, also bei 3 ml Belebtschlamm pro 1 insgesamt 17 m³ Wasser für 1 kg Futterzugabe.

Da auch 5 l Belebtschlamm pro kg Futter entstehen, müssen zur Erzielung des Fließgleichgewichtes 1,7 m³ sauberes Wasser pro kg Futter zugesetzt werden und 1,7 m³ schlammhaltiges Wasser laufen ab.

Letzteres kann man in ein Absetzbecken geben, den Schlamm herausholen und das klare Wasser ins Fischbecken zurückgeben, so daß Wasser gespart wird.

Für 1 kg Futter werden etwa 50 kg Lachse benötigt, die sich in den obigen 17 m³ Fischbecken befinden, das sind 3 kg Lachse in 1 m³.

Die Oberfläche eines solchen Lachsbeckens beträgt bei 2,5 m Tiefe etwa 5 m², so daß nur ein Teil des Bodens mit Belüftern ausgelegt werden muß, um bei feinblasiger Belüftung genügend Sauerstoff einzutragen.

### Beispiel 3:

Für Intensiv-Fischzuchtanlagen ist dieser Besatz relativ gering, 30 kg/m³ an Lachsen sind möglich. Also kann man den Fischteil durch Siebe verkleinern, das Wasservolumen im Becken bleibt. Oder man baut über den Belüftern Packungen ein, die Belebtschlamm adhäsiv binden und die Abbau-Raumleistung erhöhen, ohne daß Belebtschlammflocken in der Schwebe gehalten werden müssen.

Wenn man 30 kg Lachse je m³ Fischteil halten will, 0,7 kg Futter füttern will, müßten ca. 0,2 m³ Packungen mit etwa 35 m² Flächen für je 30 kg Lachse ( = 0,7 kg Futter) installiert werden. Mit Nebenbedarf für die Belüfter (ungefähr 0,2 m³ Raum/30 kg Lachse) ergeben sich 1 + 0,2 + 0,2 = 1,4 m³ Fischteil. Gibt man nun 1,7 m³ Wasser pro kg Futter, so entstehen wie im Beispiel 2 die 3 ml Belebtschlamm/l als Fließgleichgewicht. Diese werden wieder ins Absetzbecken (nur 0,04 m² Fläche für je 30 kg Lachse, etwa 0,1 m³ Absetzbecken) geführt, das klare Wasser zurücktransportiert und der Schlamm abgezogen.

Wesentlich dabei ist, daß die Packungen sich unter den Fischen befinden und ebenso wie der Fischteil nur schwachturbulent vom Wasser durchströmt werden, wobei die Packungen nach oben hin durch Siebe abgeschlossen sind, die Wasser und Luftblasen durch- aber Futter und Fische nicht nach unten lassen. Dabei muß der Bodenteil des Fischteils ohne Belüfter und Packungen schräg sein, damit sich dort kein Schlamm absetzen kann.

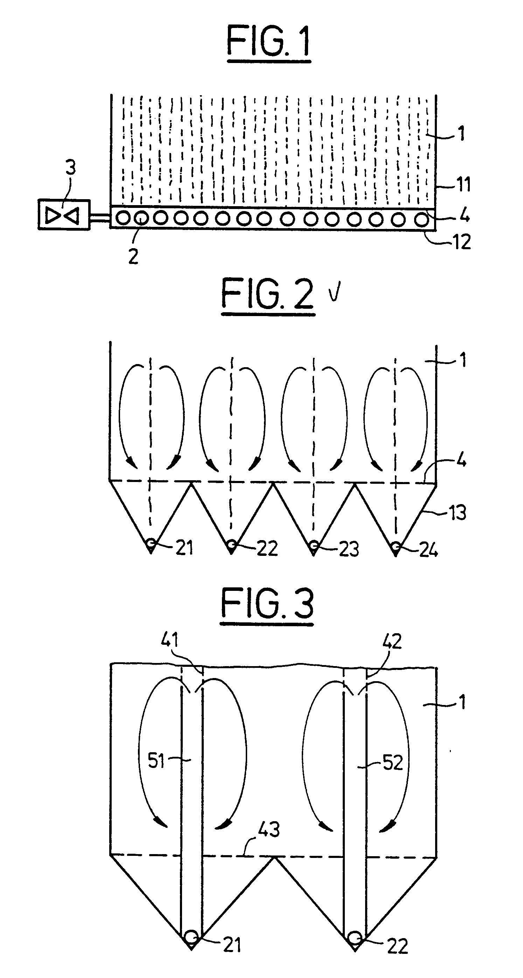

Figur 1 zeigt einen Querschnitt durch ein Fischbecken 1 mit wahlweise senkrechten oder schrägen Seitenwänden 11 und einem Beckenboden 12, der vollständig mit einer Belüftungseinrichtung 2 ausgelegt ist, die von einem Aggregat 3 mit sauerstoffhaltigem Gas gespeist wird, dessen Volumen pro Zeiteinheit bzw. dessen Druck am Aggregat 3 einstellbar bzw. regelbar ist.

Die Belüftungseinrichtung 2 kann aus Belüfterrohren, -platten, -schläuchen oder aus gummielastischen, schlauchförmigen Membranen bestehen, deren Wandungen Perforationen aufweisen, durch die das zugeführte Gas von innen nach außen hindurchtritt und blasenförmig in die umgebende Flüssigkeit gelangt.

Der Gasdruck wird am Aggregat 3 so eingestellt bzw. von diesem derart geregelt, daß im gesamten Fischbecken 1 ein möglichst gleichmäßiger Blasenschleier gegeben ist, der keine größeren Turbulenzen enthalten soll. In diesem gleichmäßigen Blasenschleier fühlen sich viele Fischarten wie Lachse oder Forellen, die ihr Futter mit den Augen finden müssen, überraschend wohl. Alternativ hierzu kann im sog. Belebtschlammverfahren durch das gleichmäßige Blasenbild sich absetzender Schlamm aufgewirbelt und in der Schwebe gehalten werden, was der Lebensweise vieler Fischarten wie Wels, Aal, Karpfen, Schleie, Scholle, Steinbutt und dgl. entgegenkommt.

Je nach Gasdurchsatz, Ausgestaltung des Beckenbodens und in Abhängigkeit von zusätzlichen Maßnahmen wie dem Anschluß eines Absetzbeckens, Algenteiches oder dgl. können aufeinander abgestimmte Maßnahmen ergriffen werden, die eine optimale Aufzucht auch anderer Wassertiere ermöglichen.

Über der Belüftungseinrichtung 2 kann ein Sieb 4 vorgesehen werden, wobei zwischen der Belüftungseinrichtung 2 und dem Sieb 4 zusätzlich Füllkörperpackungen angeordnet werden können, so daß sich die Packungen unter den Fischen befinden und nur schwach vom Wasser durchströmt werden. Dadurch sind die Packungen nach oben hin durch Siebe abgeschlossen, die Wasser und Luftblasen durchlassen aber Futter und Fische nicht nach unten lassen.

Der in Figur 2 dargestellte Querschnitt zeigt einen nur teilweise mit Belüftungseinrichtungen 21 bis 24 versehenen Fischteilboden, während der Rest des Bodens 13 V-förmig abgeschrägt ist. Die Belüftungseinrichtungen 21 bis 24 befinden sich an der jeweils tiefsten Stelle des Fischteilbodens 13, so daß sich kein Schlamm am Boden absetzen kann und stattdessen durch das aus der Belüftungseinrichtung austretende Gas aufgewirbelt und im Fischteil in der Schwebe gehalten wird. Auch in diesem Ausführungsbeispiel kann der Boden des Fischteils durch ein Sieb 4 gebildet sein, das den Durchtritt von Gas und Wasser ermöglicht, Fische und Belebtschlamm aber zurückhält.

Figur 3 zeigt zusätzliche über den Belüftungseinrichtungen 21, 22 angeordnete vertikale Schächte 51, 52, die an ihrem oberen, an die Wasseroberfläche grenzenden Rand durch Siebe 41, 42 abgeschlossen sind. Zusätzlich ist ein Sieb 43 oberhalb des V-förmigen Bodens waagerecht angeordnet. Fische können sowohl im Schacht als auch außerhalb des Schachtes gehalten werden.

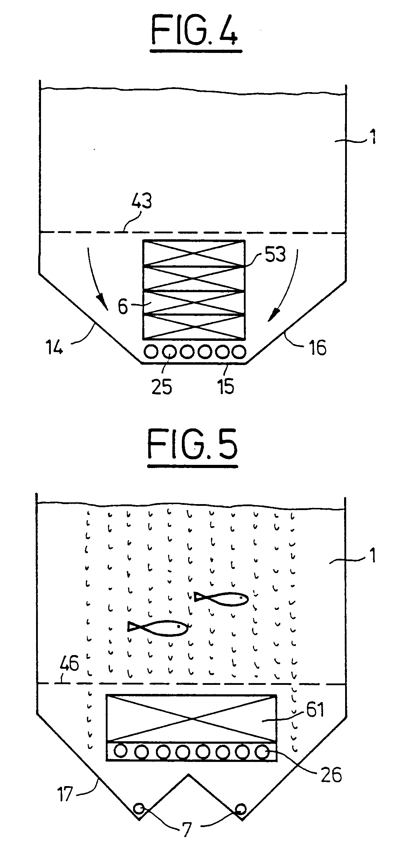

Figur 4 zeigt einen Querschnitt durch ein Fischbecken 1 mit trapezförmigem Boden 14, 15, 16, auf dessen waagerechtem Bodenteil 15 Belüftungseinrichtungen 25 angeordnet sind, über denen ein senkrechter Schacht 53 mit darin angeordneten Füllkörperpackungen 6 vorgesehen ist.

Figur 5 zeigt einen Querschnitt durch ein Fischbecken 1 mit W-förmigem Beckenboden 17, dessen Tiefteil im Gegensatz zu den voranstehend beschriebenen Ausführungsformen jedoch nicht belüftet ist. Stattdessen ist die Belüftungseinrichtung 26 oberhalb des Tiefteils angeordnet und weist darüber angeordnete Füllkörperpackungen 61 auf, die zum Fischteil mit einem Sieb 46 abgeschlossen sind.

An der tiefsten Stelle des Beckenbodens 17 gleiten Räumeinrichtungen 7 entlang und befördern sich absetztenden Belebtschlamm zu einer Entnahme- oder Wirbelstelle, wo er wahlweise entnommen oder in den Fischteil des Fischbeckens aufgewirbelt wird. Der Boden des Fischteils wird durch ein Sieb 46 gebildet, so daß Fische nicht in den Tiefteil des Fischbeckens und in die Packungen gelangen können. Der Tiefteil erfüllt auf diese Weise die Funktion eines Absetzbeckens. Mit der Räumeinrichtung 7 müssen lediglich ca. 5 l Schlamm Trockensubstanz pro kg Futter unter den Fischen weggeräumt werden, so daß keine größeren Räumeinrichtungen erforderlich sind. Das Absetzen von Schlamm im Tiefteil wird durch die schwach-turbulente Strömung im Fischteil stark gefördert.

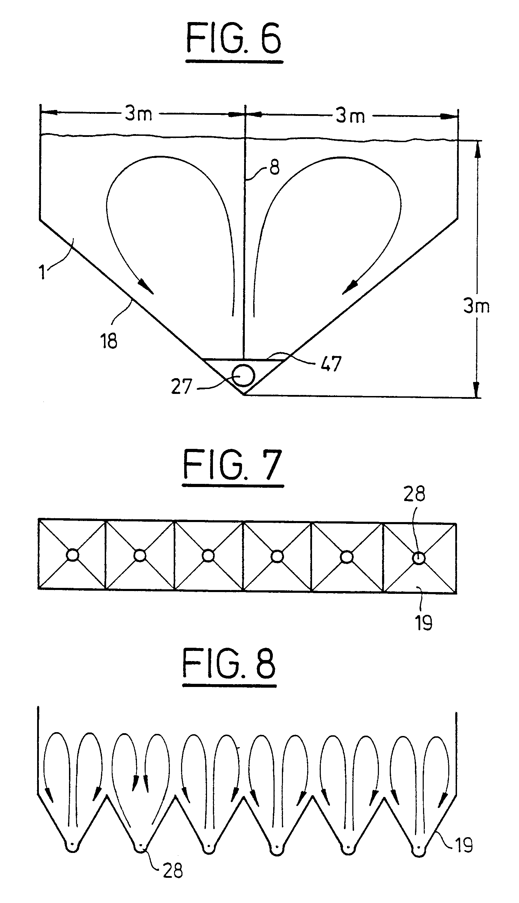

In Figur 6 ist ein Querschnitt durch ein Becken 1 mit V-förmigen Seitenwänden 18 dargestellt, die bis zum Beckenboden reichen, wo sich eine Belüftungseinrichtung 27 mit darüber wahlweise angeordnetem Sieb 47 befindet. Oberhalb des Siebes 47 bzw. der Belüftungseinrichtung 27 ist eine vertikale Wand 8 angeordnet, die bis über die Wasseroberfläche reicht.

Infolge dieser Anordnung ergibt sich der in Figur 6 eingetragene Strömungsverlauf durch den im Becken aufsteigenden Blasenschleier. Diese Lösung eignet sich beispielsweise für die Zucht von Plankton, wobei in den beiden Beckenhälften unterschiedliche Planktonarten und -mengen sein können. Insbesondere eignet sich diese Anordnung für Algenzucht auf der einen Seite und Zooplankton mit Algen als Futter auf der anderen Seite.

Figur 7 zeigt in Draufsicht und Figur 8 im Querschnitt ein Becken mit mehreren pyramidenförmigen Beckenböden 19, die nebeneinander angeordnet sind und an der tiefsten Stelle einen Anschluß für eine Belüftungseinrichtung 28 aufweisen.

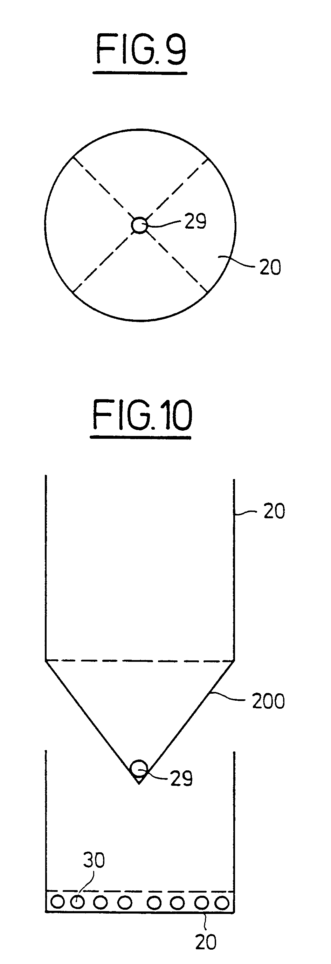

In den Figuren 9 und 10 ist in Draufsicht bzw. im Querschnitt ein Rundbecken 20 dargestellt, das bis zum Boden zylindrisch ausgebildet ist, wobei in diesem Fall der Boden flächendeckend mit Belüftungseinrichtungen 30 ausgelegt ist, während bei einem V-förmigen Boden 200 nur eine Belüftungseinrichtung 29 erforderlich ist.

In einer zeichnerisch nicht näher dargestellten Ausführungsform können die Teiche bzw. Becken als im Querschnitt V-förmige und wenige Meter breite Gräben ausgebildet sein, die eine Länge von beispielsweise 100 m aufweisen. Die Fische werden in den Gräben durch vertikale, quergestellte Siebe von einem Ende der Gräben zum anderen geschoben.

Dabei wird die Belüftungseinrichtung nur schwach mit sauerstoffhaltigem Gas beaufschlagt, wobei mit einer Gasmenge von weniger als 10 m³, vorzugsweise weniger als 6 m³ je m² Belüfterfläche gearbeitet wird, da sonst das Wasser zu schnell nach oben strömt.

Neben der Aufzucht von Fischen spielt die Züchtung von Plankton als Futter für Fische eine wichtige Rolle in der Aquakultur. Unter Anwendung der erfindungsgemäßen Vorrichtung ist alternativ oder in Ergänzung zur Fischzucht eine Planktonzucht in den vorstehend beschriebenen Becken möglich, wobei über die Belüftungseinrichtungen neben sauerstoffhaltigem Gas, reiner Sauerstoff, Luft oder kohlendioxydhaltiges Gas für die Versorgung von Algen eingesetzt werden kann.

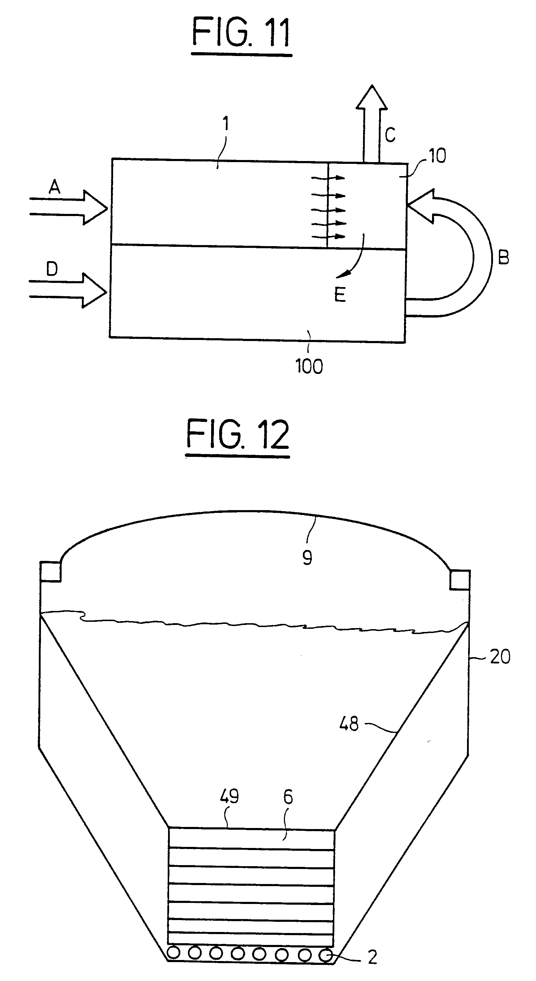

Figur 11 zeigt eine schematische Draufsicht auf ein Intensiv-Fischzuchtbecken 1 mit daneben angeordnetem Algenbecken 100 und einem an das Fischbecken 1 anschließenden Absetzbecken 10.

Da das aus dem Fischbecken 1 ablaufende belebtschlammhaltige Wasser ein hervorragender Nährboden für Wasserflöhe ist, kann anstelle des Absetzbeckens 10 auch ein Wasserflohbecken vorgesehen und die Wasserflöhe an Brutfische verfüttert werden. Das klare Abwasser ist ebenso wie das schlammhaltige Wasser ein hervorragender Nährboden für Algen, so daß in einem Becken 100 Algen gezüchtet werden können, die dann von Wasserflöhen im Becken 10 mitverwertet werden.

Da Algen sehr fein sind und sich kaum absetzen, können sie durch gleichzeitiges Durchlaufenlassen von Algenwasser und Belebtschlammwasser durch ein Absetzbecken 10 mit Hilfe von Belebtschlamm als sehr wirksamem "Schwebe-Filter" herausgeholt werden. Das Gemisch kann man weiter eindicken und dann als Fischfutter (auch Belebtschlamm ist ein gutes Fischfutter) aufbereiten, oder an Wasserflöhe oder an "filtrierende" Tiere wie Krabben usw. verfüttern.

Die heutige Jahresproduktion in Mitteleuropa beträgt höchstens 6 Tonnen Fisch pro Hektar. Mit dem erfindungsgemäßen Verfahren ist eine Produktion von 120 t Fisch pro Hektar in einem Teich ohne Dach und von 360 t pro Hektar in einem Teich mit Dach möglich. Bei einer Kombination mit einem zusätzlichen Hektar Algenteich können auf zusammen 2 ha ( 1 ha Fisch und 1 ha Algen) 1000 t Fisch produziert werden. Der Wasserverbrauch ist dabei minimal.

In der in Figur 11 dargestellten Anordnung wird dem Fischbecken Frischwasser A zugeführt und Klarwasser E aus dem Absetzbecken in das Algenbecken 100 geleitet. Dieses kann zusätzlich mit Rindergülle, Hühnerdung, Melasse oder anderen düngerhaltigen Stoffen gedüngt werden. Algen und Belebtschlamm werden zurück in das Absetzbecken 10 geleitet und diesem Schlamm und Algen zur Futterverwertung oder Aufzucht von Wasserflöhen entzogen, die wiederum zusammen mit Algen und Belebtschlamm an Fische verfüttert werden können, deren Exkremente zur Teilversorgung der Algen benutzt werden.

Bei diesem nahezu geschlossenen Kreislauf ist nur noch die Sonneneinstrahlung ein limitierender Faktor. Da in der Nacht auch die Algen Sauerstoff verbrauchen, muß beim erfindungsgemäßen Verfahren nachts eine stärkere Belüftung, d.h. Sauerstoffversorgung erfolgen, wobei es optimal ist, die Fische nur tagsüber zu füttern und dabei den von den Algen produzierten Sauerstoff zu nutzen, und nachts nur für den Ruhestoffwechsel der Fische, des Belebtschlamms und der Algen wesentlich weniger Sauerstoff einzutragen. Tagsüber wird mit wenig Gaseintrag nur umgewälzt, weil dann genügend Sauerstoff von den Algen abgegeben wird.

In einer Variante hierzu kann das Fischbecken zur Steigerung der Intensiv-Fischzucht in einer Halle angeordnet und eine Vielzahl von Füllkörperpackungen unter den Fischteilen vorgesehen werden. Das Fischbecken wird über einen Ablauf mit einem Algenteich verbunden, wobei die Beschickung des Algenteichs vorteilhafterweise nur tagsüber erfolgt. Zwischen dem Algenteich und einem zusätzlichen Wasserflohbecken ist ein Bypass vorgesehen, so daß das Wasserflohbecken kontinuierlich vom Algenteich beschickt wird. Angereicherte Wasserflöhe werden mit wenig Wasser, das sauber ist, zurück in den Fischteil geleitet.

Da dabei wenig Wasser im Fischteil ausgetauscht wird, kann man den schlammhaltigen Fischbeckenablauf in einem Gegenstrom-Wärmetauscher gegen anders temperiertes Teich - (Wasserfloh-)wasser tauschen und so die Temperatur für die Fische optimal halten. Denkbar ist so z.B. im Winter in Europa eine Fischbeckentemperatur von 25 °C und eine Algenteichtemperatur (unter einem Dach) von 10 °C, da dann schon viele Algen gut wachsen.

In heißen Ländern wäre der Algenteich zugleich Kühleinrichtung für die im Fischteil anfallende Wärme.

In den Algenteichen ist eine Mischkultur von Algen und Belebtschlamm möglich, wobei sich auf den Flächen des Belebtschlamms Algen ansiedeln können, die durch Absetzenlassen in einem Becken 10 angereichert werden können, wodurch die sonst sehr problematische Gewinnung der Algen stark vereinfacht wird.

Die Tiefe der Algenteiche mit vertikaler Umwälzung beträgt vorzugsweise mindestens 2 m. Es hat sich überraschenderweise gezeigt, daß bei der erfindungsgemäßen vertikalen Umwälzung des Algenwassers eine noch höhere Flächenproduktion von Algen entsteht als bei den üblicherweise horizontal umgewälzten flachen Algengräben. Auch für die Unterbringung der notwendigen großen Schlammengen für den Abbau der Fischexkremente sollte das Volumen der Teiche groß sein, so daß die Belüftungseinrichtungen vorzugsweise in 2,5 m Tiefe, besser in 3 bis 5 m Tiefe, angeordnet werden.

Der große Wasserkörper sorgt auch für eine geringere Amplitude der Tag/Nacht-Wassertemperatur, so daß die großen Nachteile flacher Algenteiche ausgeglichen sind.

Wenn Fischteiche mit Fischfutter überfüttert werden, kommt es nachts zu einem so großen Sauerstoffverbrauch und unter Umständen zu einer Ausscheidung von Algentoxiden, so daß Fische gefährdet sind. Es war bisher ein Problem, mit wenig Energie nachts die Teiche so zu belüften und umzuwälzen, daß die Fische nicht gefährdet sind. Daher werden Algen in solchen Teichen oft durch Chlorkalk vernichtet, was auch die Bodenfauna zum Teil zerstört. Bei dem neuen Verfahren ist eine hohe Algenmenge, die zwangsläufig bei so hoher Düngung entsteht, kein Problem, weil die sonst so gefährlichen anoxischen Verhältnisse sicher verhindert werden.

Die aus einzelnen langen und wenige Meter breiten Gräben bestehenden Algenteiche weisen einen Boden mit einer Neigung von mindestens 30°, vorzugsweise über 45 ° auf. Die Gräben sind vorteilhafterweise bei mittig angebrachten Belüftern höchstens doppelt so breit wie an der tiefsten Stelle tief und können bei vertikaler Umwälzung, die durch die Belüftung hervorgerufen wird, vom Wasser in horizontaler Richtung beliebig schnell oder langsam durchströmt werden. Diese horizontale Strömung wird z.B. so erzeugt, daß zwischen zwei vorzugsweise parallel angeordneten Gräben an den Grabenenden ein Überlauf angeordnet ist, wobei Fische durch Siebe zurückgehalten werden. Das Wasser wird von einem Graben in den anderen beispielsweise mit Hilfe einer Mammutpumpe herübergepumpt.

Dünger kann an einer Stelle zugeben werden und verteilt sich über die Fläche durch die Horizontalströmung. Letztere braucht aber wegen der Vertikalumwälzung nicht so groß zu sein, wie in bekannten Algenteichsystemen, die z.B. mit Paddeln eine Horizontalströmung von über 20 cm/sec. haben müssen, damit die Algen sich nicht doch absetzen.

Auch in Fischbecken erzeugt man zweckmäßig eine Horizontalströmung, wodurch eine gleichmäßige horizontale Schlammverteilung gewährleistet ist. Am besten werden 2 oder mehr Gräben zu einem Horizontal-Kreislauf zusammengeschaltet.

Die Konstruktion von wärmeisolierenden Dächern über den Teichen wird durch die Anordnung der schmalen, parallelen Gräben, mit den kleinen, vertikalen Trennwänden 20 dazwischen (vgl. Figur 12) sehr vereinfacht. Auf den Trennwänden 20 können z.B. auch quer über den Graben reichende Fahrbühnen 9 gelagert werden, auf denen Futterautomaten für Fischfutter angebracht werden können.

Optimal ist es bei der Verwendung von Füllkörperpackungen 6, nicht den ganzen Beckenboden mit Belüftern/Packungen auszulegen, sondern unbelüftete Zonen dazwischen zu lassen. Konsequenterweise muß bei den unbelüfteten Zonen ein schräger Boden vorgesehen sein, damit der sich absetzende Schlamm zum Belüfter fließt. Vorteilhaft ist es, wenn auch der Fischteil über unbelüfteten Zonen abgeschrägte Siebe 48 aufweist, wodurch sich geringere Strömungsgeschwindigkeiten des Wassers in diesen Sieben 48 ergeben.

Figur 12 zeigt einen Querschnitt durch eine derartige Vorrichtung mit abgeschrägten Sieben 48 und einer über einem Fischbecken-Graben angeordneten Fahrbühne 9.

Aus der vorstehenden Beschreibung ergeben sich folgende Maßnahmen zur Optimierung der Aufzucht von Wassertieren und Algen:
1. Flächendeckende Anordnung von Belüftungseinrichtungen auf dem Boden eines Beckens oder teilweise Anordnung von Belüftungseinrichtungen auf dem Boden eines Beckens, wobei der Boden auf die Belüftungseinrichtung zu abgeschrägt ist und die Belüftungseinrichtung an der tiefsten Stelle angeordnet ist.
   Daraus resultiert entweder ein flacher Boden oder ein V- bzw. vielfach-V-förmiger, pyramiden- oder kegelförmiger Beckenboden, wobei an tiefster Stelle Belüftungseinrichtungen angeordnet sind.
2. Beaufschlagen der Belüftungseinrichtungen mit einem sauerstoffhaltigen Gas derart, daß im Becken ein Blasenschleier entsteht, wozu der Druck des zugeführten Gases steuer- und regelbar ist.
3. Für bestimmte Fischarten zusätzliches Aufrechterhalten eines Belebtschlamm-Schwebezustandes, wobei mindestens 20 l abgesetzten Schlamms je kg Tagesfuttermenge, besser noch mehr als 40 l Schlamm je kg Tagesfuttermenge vorliegen sollen, was durch Abfiltrieren oder einen sog. Imhoff-Trichter nach 1 - 2 Std. Absetzzeit bestimmbar ist.
4. Werden über den Belüftungseinrichtungen Packungen eingesetzt, so kann die freischwebende Belebtschlammenge (nötig bei Lachsen usw.) kleiner sein bzw. für jeden m² Packungsfläche können ca. 20 g Futter pro Tag zusätzlich gefüttert werden.
5. Am Fischteil kann eine Absetz- oder Filteranlage angeschlossen sein, die Schlamm im Fischbecken zurückhält, was gut für Aale, Welse, Schleie, Karpfen, Schollen, Steinbutt und dgl. ist. So kann die Schlammenge größer gehalten werden, da mit dem abfließenden Wasser praktisch kein Schlamm abfließt. Eine Über-Anreicherung von Schlamm wird dann vermieden durch ein gezieltes Abziehen von Schlamm über einen zusätzlichen Ablauf mit Kontrolle der abgezogenen Menge.
6. Sowohl klares Wasser als auch gezielt abgezogener Schlamm können im Bypass benutzt werden zum:
   a) Eindicken des Schlammes und Mitbenutzung bei der Futterherstellung,
   b) Nutzung in Wasserflohbecken,
   c) Nutzung in Algenteichen,
   d) Nutzung in Wasserflohbecken und Algenteichen.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch machen.

## Patentansprüche

1. Verfahren zur Aufzucht von Wassertieren in einem Becken (1), dessen Beckenboden (12 bis 20) mit Begasungseinrichtungen (2; 21 bis 30) zur Begasung des Beckenwassers versehen ist,
**dadurch gekennzeichnet,**
daß das von den Begasungseinrichtungen (2; 21 bis 30) abgegebene Gas einen sich aus Futterresten, Exkrementen und Mikroorganismen zusammensetzenden, zum Beckenboden (12 bis 20) absinkenden oder am Beckenboden (12 bis 20) abgesetzten Belebtschlamm aufwirbelt und im Schwebezustand haltend im Becken (1) verteilt.

2. Verfahren nach Anspruch 1, **dadurch gekennzeichnet,** daß der Belebtschlamm zusätzlich durch eine horizontale Strömungskomponente im Becken (1) verteilt wird.

3. Verfahren nach Anspruch 1 oder 2**, dadurch gekennzeichnet,** daß die Begasungseinrichtungen (2; 21 bis 30) mit schwach sauerstoffhaltigem Gas mit einer Gasmenge von weniger als 10 m³ Gas, vorzugsweise weniger als 6 m³ Gas pro m² Fläche der Begasungseinrichtungen (2; 21 bis 30) beaufschlagt werden.

4. Verfahren nach einem der vorangehenden Ansprüche, **dadurch gekennzeichnet,** daß das Becken (1) einerseits an eine Frischwasserzufuhr (A) angeschlossen und andererseits über eine Verbindung zur Förderung von Belebtschlamm wechselseitig mit einem Schlamm-Absetzbecken (10) verbunden wird, das über eine Klarwasserleitung für gereinigtes Wasser (E) mit einem Algen- oder Zooplanktonbecken (100) verbunden wird, und daß das Algen- oder Zooplanktonbecken (100) über eine Algen- und Belebtschlammverbindung (B) mit dem Schlamm-Absetzbecken (10) verbunden wird.

5. Verfahren nach einem der vorangehenden Ansprüche, **dadurch gekennzeichnet,** daß über den Begasungseinrichtungen (21, 22, 25) vertikale Schächte (51, 52, 53) angeordnet sind, die mit Füllkörperpackungen (6) versehen sind.

6. Verfahren nach einem der vorangehenden Ansprüche, **dadurch gekennzeichnet,** daß oberhalb der Begasungseinrichtungen (2; 21 bis 30) Siebe (4; 41 bis 47) angeordnet sind.

7. Verfahren nach einem der vorangehenden Ansprüche, **dadurch gekennzeichnet,** daß oberhalb der Begasungseinrichtungen (27) eine vertikale Wand (8) angeordnet ist, die das Becken (1) in zwei Teilräume unterteilt.

8. Verfahren nach einem der vorangehenden Ansprüche, **dadurch gekennzeichnet,** daß der Beckenboden (14, 15, 16) trapezförmig ausgebildet ist und daß im waagerechten Teil (15) des trapezförmigen Bodens mindestens eine Begasungseinrichtung (25) angeordnet ist und daß über der Begasungseinrichtung (25) ein vertikaler Schacht (53) und/oder mindestens eine Füllkörperpackung (6) angeordnet ist.

9. Verfahren nach einem der vorangehenden Ansprüche, **dadurch gekennzeichnet,** daß der Beckenboden (19) pyramidenförmig, W-förmig oder als Rundbecken mit einem kegelförmigen oder ebenen Beckenboden (20; 200) oder das Becken (1) als im Querschnitt V-förmiger Graben ausgebildet ist.

## Claims

1. Process for farming aquatic animals in a tank (1) whose tank base (12 to 20) is provided with aerating devices (2; 21 to 30) for aerating the tank water,
characterised in that the gas given off by the aerator devices (2; 21 to 30) stirs up the activated sludge which is made up of food residues, excrement and micro-organisms and which is sinking to or has settled on the tank base (12 to 20), and distributes this sludge in the floating state throughout the tank (1).

2. Process according to claim 1 characterised in that the activated sludge is additionally distributed throughout the tank by a horizontal flow component.

3. Process according to claim 1 or 2 characterised in that the aerator devices (2; 21 to 30) are biased with weak oxygen-containing gas with a gas volume of less than 10 m³ gas, preferably less than 6 m³ gas per m² surface of the aerator devices (2; 21 to 30).

4. Process according to one of the preceding claims, characterised in that the tank (1) is attached on one side to a fresh water supply (A) and on the other side is connected by a connection for supplying activated sludge alternately with a sludge settling tank (10) which is connected by a clear water pipe for purified water (E) to an algae or zoo plankton tank (100) , and that the algae or zoo plankton tank (100) is connected by an algae and activated sludge connection (B) to the sludge settling tank (10).

5. Process according to one of the preceding claims, characterised in that vertical shafts (51,52,53) provided with filter bed packs (6) are mounted above the aerator devices (21,22,25).

6. Process according to one of the preceding claims, characterised in that screens (4; 41 to 47) are provided above the aerator devices (2; 21 to 30).

7. Process according to one of the preceding claims, characterised in that a vertical wall (8) is provided above the aerator devices (27) and divides the tank (1) into two partial chambers.

8. Process according to one of the preceding claims, characterised in that the tank base (14,15,16) is trapezoidal and that in the horizontal part (15) of the trapezoidal base there is at least one aerator device (25) and that a vertical shaft (53) and/or at least one filter-bed pack (6) is mounted above the aerator device (25).

9. Process according to one of the preceding claims, characterised in that the tank base (19) is designed pyramid-shaped, W-shaped or as a circular tank with a conical or flat tank base (20; 200) or the tank is designed as a trench with V-shaped cross-section.

## Revendications

1. Procédé de culture d'animaux aquatiques dans un bassin (1), dont le fond (12 à 20) est pourvu de dispositifs de gazéification (2; 21 à 30) destinés à alimenter en gaz l'eau du bassin,
caractérisé en ce que le gaz fourni par les dispositifs de gazéification (2; 21 à 30) fait tourbillonner une boue activée, qui se compose de résidus de nourriture, d'excréments et de micro-organismes, descend vers le fond du bassin (12 à 20) et se dépose sur le fond du bassin (12 à 20), et la répartit dans le bassin (1) en la maintenant à l'état de suspension.

2. Procédé suivant la revendication 1, caractérisé en ce que la boue activée est en supplément répartie dans le bassin (1) par une composante d'écoulement horizontal.

3. Procédé suivant l'une des revendications 1 et 2, caractérisé en ce que les dispositifs de gazéification (2; 21 à 30) sont alimentés en un gaz à faible teneur en oxygène avec une quantité de gaz inférieure à 10 m³, de préférence inférieure à 6 m³, par mètre carré de surface des dispositifs de gazéification (2; 21 à 30).

4. Procédé suivant l'une des revendications précédentes, caractérisé en ce que le bassin (1), d'une part, est raccordé à une amenée d'eau fraîche (A) et, d'autre part, est relié, par un conduit destiné au transport de boue activée, de manière réciproque à un bassin de sédimentation de boue (10) qui, par l'intermédiaire d'un conduit à eau claire destiné à de l'eau purifiée (E), est en communication avec un bassin à algues ou zooplancton (100) et en ce que le bassin à algues ou zooplancton (100) est, par l'intermédiaire d'un conduit à algues et boue activée (B), relié au bassin de sédimentation de boue (10).

5. Procédé suivant l'une des revendications précédentes, caractérisé en ce que des puits verticaux (51, 52, 53), qui sont pourvus de garnissages de corps de remplissage (6), sont agencés au-dessus des dispositifs de gazéification (21, 22, 25).

6. Procédé suivant l'une des revendications précédentes, caractérisé en ce que des cribles (4; 41 à 47) sont agencés au-dessus des dispositifs de gazéification (2; 21 à 30).

7. Procédé suivant l'une des revendications précédentes, caractérisé en ce qu'une paroi verticale (8), qui subdivise le bassin (1) en deux espaces partiels, est agencée au-dessus des dispositifs de gazéification (27).

8. Procédé suivant l'une des revendications précédentes, caractérisé en ce que le fond du bassin (14, 15, 16) est réalisé sous une forme trapézoïdale et en ce qu'au moins un dispositif de gazéification (25) est agencé dans la partie horizontale (15) du fond trapézoïdal et en ce qu'un puits vertical (53) et/ou au moins un garnissage de corps de remplissage (6) sont agencés au-dessus du dispositif de gazéification (25).

9. Procédé suivant l'une des revendications précédentes, caractérisé en ce que le fond du bassin (19) est réalisé sous une forme pyramidale, de W ou de bassin rond ayant un fond conique ou plan (20; 200) ou en ce que le bassin (1) est réalisé sous la forme d'un fossé en forme de V en section transversale.
